(19) Europäisches Patentamt
European Patent Office
Office européen des brevets

(11) Publication number: 0 084 227
B1

(12) EUROPEAN PATENT SPECIFICATION

(45) Date of publication of patent specification: 11.03.87

(51) Int. Cl.[4]: C 07 C 125/065, C 08 F 22/26, C 09 D 3/80, C 07 C 57/04

(21) Application number: 82306502.4

(22) Date of filing: 07.12.82

(54) **Acryloyl and alkylarcryloyl polyalkoxy carbamate compositions and their use in radiation curable coatings.**

(30) Priority: 10.12.81 US 329373

(43) Date of publication of application: 27.07.83 Bulletin 83/30

(45) Publication of the grant of the patent: 11.03.87 Bulletin 87/11

(84) Designated Contracting States: BE DE FR GB IT NL

(56) References cited: EP-A-0 036 813

(73) Proprietor: THE VALSPAR CORPORATION
1101 East Third Street, South
Minneapolis Minnesota 55415 (US)

(72) Inventor: Chen, Albert Chung-Pung
14 Vaux Hall Road
East Brunswick, NJ 08816 (US)
Inventor: Guarino, John Phillip
71 Stonicker Drive
Lawrenceville, NJ 08648 (US)
Inventor: Nagy, Frank Andrew
R.D. 5, Box 126, Old Clinton Road
Flemington, NJ 08822 (US)

(74) Representative: Jones, Alan John et al
CARPMAELS & RANSFORD 43 Bloomsbury Square
London, WC1A 2RA (GB)

EP 0 084 227 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to compositions, containing acryloyl polyalkoxy carbamates and alkylacryloyl polyalkoxy carbamates, which are suitable for use as radiation curable coatings, particularly those cured by electron beam. The carbamates are low viscosity liquids which also find utility as reactive diluents for polyfunctional acrylate and alkylacrylate resinous materials to give strong and useful coatings.

The acryloyl polyalkoxy carbamate and alkylacryloyl polyalkoxy carbamate monomers which comprise an essential ingredient of the compositions of this invention have the formula

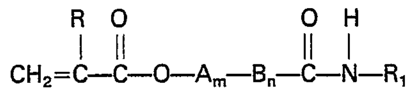

in which

R is H or alkyl, preferably H or $C_1$—$C_4$ alkyl, most preferably H or methyl;

$R_1$ is H, alkyl, cycloalkyl, aryl or aralkyl;

A is -alkyl-O-, in which the alkyl group preferably contains 2 to 4 carbon atoms, and most preferably contains 2 or 3 carbon atoms;

B is -alkyl-O-, different from A in which the alkyl group preferably contains 2 to 4 carbon atoms, and most preferably contains 2 or 3 carbon atoms;

m is a number from 0 to 12;

n is a number from 0 to 12; and

m+n is 2 or more.

Alkyl radicals are preferably $C_1$—$C_4$-alkyl which can contain non interfering substituents.

The preferred cycloalkyl radicals are cyclopentyl and particularly cyclohexyl which can be substituted, for example with alkyl groups, particularly $C_1$—$C_4$ alkyl.

The aryl radical is preferably phenyl, which can be substituted with non-interfering substituents such as $C_1$—$C_4$ alkyl; $C_1$—$C_4$ alkoxy; halogen, particularly chloro; cyano and nitro.

These compounds may be prepared by methods which are known in the art. For example, an acrylate or alkylacrylate can be esterified to introduce the "A" radical resulting in a hydroxy terminated ester which can be in turn chain extended with a 1,2-epoxide, e.g. propylene oxide to introduce one or more "B" units. This product is hydroxy terminated and can be converted into the carbamate derivative by known reactions, such as by reaction with the appropriate alkyl, aryl or aryl isocyanate, or by reaction with phosgene to form the chloroformate which is then reacted with ammonia or a suitable amine to form the desired product. US—A—3,674,838 discloses several of the above described reactions, and others.

According to the invention the aforesaid compositions are mixtures comprising a carbamate as hereinabove defined and a chain extended acrylate or methacrylate ester which has the formula

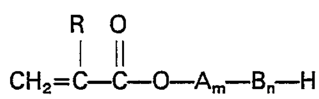

the symbols in which are defined as they were in relation to the carbamate. The carbamate comprises 50 to 99 weight percent of the mixture and the ester comprises 1 to 50 weight percent. Preferably, the carbamate constitutes 80 to 99 weight percent and the ester constitutes 1 to 20 weight percent of the mixture. Such mixtures result from a preferred reaction scheme wherein an isocyanate is reacted with a stoichiometric excess of the acrylate ester to ensure complete utilization of isocyanate, which is generally a relatively noxious material whose presence in the product is considered undesirable.

The mixtures are useful in a variety of applications which are in themselves known for other acrylate monomers, particularly for use alone, or in mixtures with other monomers, as radiation curable coatings. A number of suitable mixtures are disclosed in the following Examples.

Curing of the mixtures can be accomplished with radiation, advantageously with electron beam or ultraviolet radiation. When ultraviolet radiation is utilized a photosensitizer in the composition is desirable. Typical photosensitizers are benzophenone and benzoin ethers such as the ethyl or butyl ethers.

In the following Examples, all parts are by weight unless otherwise specified.

Example 1

Into a reaction vessel was charged 3,343.7 parts of 2-hydroxyethyl acrylate (HEA), 1.9 parts of triethylamine, 6.9 parts of polymerization inhibitor (butylated hydroxytoluene) dissolved in toluene, 1.0 part of p-benzoquinone, and 2.0 parts of dilaurylthiodipropionate. The reagents were stirred under an atmosphere of 1—3% $O_2$ (the balance $N_2$) and heated to 70°C. Into the flask was added simultaneously from two inlets 3,345.4 parts of propylene oxide (PO) and 14.3 parts of gaseous $BF_3$. The reaction was complete in 4 hrs at which time 4.3 parts of triethylamine and 5.2 parts of dibutylin dilaurate were added. Temperature of the reactants was raised to 80°C and 3,112.6 parts of phenyl isocyanate (PIC) was added over a 1 hour period. The product was stirred at 80°C for 2 hrs more, and cooled. The product contains

about two moles of propylene oxide per mole of 2-hydroxyethyl acrylate and of phenyl isocyanate and is designated "HEA.2PO.PIC".

Examples 2—4

In the manner described in Example the proportions of 2-hydroxyethyl acrylate (HEA), propylene oxide (PO) and phenyl isocyanate (PIC) were varied as indicated below to obtain products corresponding to that of Example 1 but containing 1, 1.5 and 5 moles of propylene oxide per mole of 2-hydroxyethyl acrylate and phenyl isocyanate.

| Example | Designation | HEA | PO | PIC |
|---|---|---|---|---|
| 2 | HEA.PO.PIC | 4,113 | 2,057.8 | 3,626 |
| 3 | HEA.1.5PO.PIC | 3,714 | 2,786 | 3,302 |
| 4 | HEA.5PO.PIC | 2,222 | 5,554 | 2,026 |

Examples 5—22

The properties of several HEA.XPO.PIC monomers, prepared in Examples 1—4, as components of radiation curable formulations were evaluated with blends of various multifunctional acrylates and N-vinyl pyrolidone (NVP). An example of a trifunctional acrylate is a reaction product of trimethylolpropane (TMP), ethylene oxide (EO) and acrylic acid (AA) having the approximate composition $TMP(EOAA)_3$, available from Ware Chemical Co. under the name of Chemlink 176. This was blended at various levels with the HEA.XPO.PIC test monomers and NVP. Measurements were made of viscosity of the liquid compositions, tensile properties of cured films produced by electron beam irradiation, and percentage conversion to non-volatile (Yield) by the electron beam polymerization. The values for "5 MR Yields" are obtained by coating samples on weighed panels, irradiating the panels with an electron beam dose of 5 megarads baking separate samples at 177°C (350°F), and under vacuum, and recording the weight after baking a percentage of the uncured panel.

TABLE 1

| Example No. | Wt.% Composition | | | | | | Viscosity CPS | % Elongation | Break strength kPa/PSI | 5 MR Yields | |
|---|---|---|---|---|---|---|---|---|---|---|---|
| | NVP | CL176* | 1PO (Ex. 2) | 2PO (Ex. 1) | 5PO (Ex. 4) | L7602** | | | | 177°C bake | Vac. bake |
| 5 | 0 | 0 | 100 | 0 | 0 | 0 | 355 | 320 | 3516/510 | 92.0 | 99.6 |
| 6 | 0 | 0 | 0 | 100 | 0 | 0 | 390 | 235 | 965/140 | 90.3 | 99.3 |
| 7 | 0 | 0 | 0 | 0 | 100 | 0 | 700 | | Too weak | — | — |
| 8 | 0 | 20 | 79.5 | 0 | 0 | 0.5 | 240 | 45 | 18340/2660 | 93.4 | 98.4 |
| 9 | 0 | 20 | 0 | 79.5 | 0 | 0.5 | 265 | 40 | 9170/1330 | 92.4 | 99.4 |
| 10 | 0 | 20 | 0 | 0 | 79.5 | 0.5 | 435 | 19 | 3034/440 | — | 99.5 |
| 11 | 10 | 0 | 89.5 | 0 | 0 | 0.5 | 140 | 11 | 7446/1080 | 92.0 | 99.3 |
| 12 | 10 | 0 | 0 | 89.5 | 0 | 0.5 | 140 | 300 | 5516/800 | 91.8 | 99.0 |
| 13 | 10 | 0 | 0 | 0 | 89.5 | 0.5 | 240 | | Too weak | — | 98.5 |
| 14 | 10 | 20 | 69.5 | 0 | 0 | 0.5 | 95 | 20 | 41369/6000 | 94.0 | 99.4 |
| 15 | 10 | 20 | 0 | 69.5 | 0 | 0.5 | 115 | 27 | 19788/2870 | 94.3 | 98.8 |
| 16 | 10 | 20 | 0 | 0 | 69.5 | 0.5 | 155 | 17 | 3172/460 | — | 99.1 |
| 17 | 20 | 0 | 79.5 | 0 | 0 | 0.5 | 65 | | Brittle | 93.0 | 98.6 |
| 18 | 20 | 0 | 0 | 79.5 | 0 | 0.5 | 75 | 140 | 11790/1710 | 91.9 | 98.6 |
| 19 | 20 | 0 | 0 | 0 | 79.5 | 0.5 | 115 | | Too weak | — | 95.1 |
| 20 | 20 | 20 | 59.5 | 0 | 0 | 0.5 | 50 | 18 | 48953/7100 | 92.0 | 99.6 |
| 21 | 20 | 20 | 0 | 59.5 | 0 | 0.5 | 55 | 14 | 26200/3800 | 95.2 | 98.7 |
| 22 | 20 | 20 | 0 | 0 | 59.5 | 0.5 | 65 | 27 | 8550/1240 | — | 98.5 |

* Chemlink 176—$TMP(EOAA)_3$
** L7602 Silicon lubricant—Union Carbide.

Examples 23—31

The procedure of Examples 5—22 were followed with various compositions in which the cross-linking material used was Dow XD-9002, the diacrylate ester of Epon 828 (bisphenol A-epichlorohydrin epoxy resin). Results are tabulated in Table 2.

TABLE 2

| Example No. | Weight % composition | | | | Visc. CPS | % Elong. | Break strength kPa/Psi |
|---|---|---|---|---|---|---|---|
| | NVP | XD9002 | HEA.2PO.PIC | L7602 | | | |
| 23 | 0 | 0 | 100 | 0 | 390 | 235 | 965/140 |
| 24 | 0 | 10 | 89.5 | 0.5 | 885 | 82 | 5378/780 |
| 25 | 0 | 20 | 79.5 | 0.5 | 1525 | 64 | 13790/2000 |
| 26 | 10 | 10 | 79.5 | 0.5 | 300 | 85 | 15996/2320 |
| 27 | 10 | 20 | 69.5 | 0.5 | 470 | 25 | 23925/3470 |
| 28 | 20 | 0 | 79.5 | 0.5 | 75 | 140 | 11790/1710 |
| 29 | 20 | 5 | 74.5 | 0.5 | 85 | 45 | 23787/3450 |
| 30 | 20 | 10 | 69.5 | 0.5 | 125 | 16 | 38404/5570 |
| 31 | 20 | 20 | 59.5 | 0.5 | 140 | 19 | 53503/7760 |

**Claims**

1. A composition comprising a mixture of from 50 to 99% wt. of a first compound, having the formula

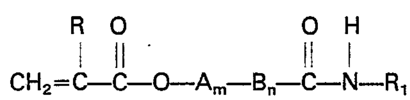

and from 1 to 50% wt. of a second compound having the formula

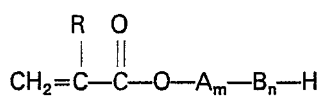

in which, for each compound,

R is H or alkyl;

$R_1$ is H, alkyl, cycloalkyl, aryl or aralkyl;

A is -alkyl-O-;

B is alkyl-O-, different from A;

m is a number from 0 to 12;

n is a number from 0 to 12; and

m+n is 2 or more.

2. A composition according to Claim 1 in which

R is H or $C_1$—$C_4$ alkyl;

$R_1$ is H, $C_1$—$C_4$ alkyl, cyclohexyl, cyclopentyl, benzyl, phenyl, or phenyl substituted with $C_1$—$C_4$ alkyl;

A has 2 to 4 carbon atoms;

B has 2 to 4 carbon atoms;

m is a number from 0 to 6; and

n is a number from 0 to 6.

3. A composition according to Claim 1 in which

R is H or methyl;

$R_1$ is phenyl;

A is $—CH_2—CH_2—O—$ or

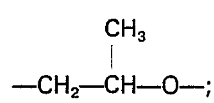

B is $—CH_2—CH_2—O—$ or

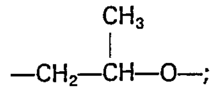

m is a number from 0 to 6; and

n is a number from 0 to 6.

4. A composition according to Claim 1 in which

R is H;

$R_1$ is phenyl;

A is

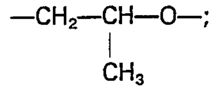

B is $—CH_2—CH_2—O—$;

m is 1; and

n is 2.

5. A composition according to any preceding claim containing from 80% to 99% by weight of said first compound and from 1% to 20% by weight of said second compound.

6. A radiation curable mixture comprising a composition as claimed in any preceding claim and a different radiation curable monomer.

**Patentansprüche**

1. Zusammensetzung, die eine Mischung aus von 50 bis 99 Gew.-% einer ersten Verbindung mit der Formel

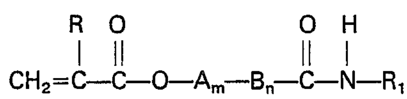

und von 1 bis 50 Gew.-% einer zweiten Verbindung mit der Formel

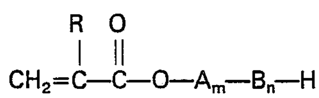

umfaßt, worin für jede Verbindung

R H oder Alkyl ist;

$R_1$ H, Alkyl, Cycloalkyl, Aryl oder Aralkyl ist;

A -alkyl-O- ist;

B Alkyl-O-, verschieden von A, ist;

m eine Zahl von 0 bis 12 ist;

n eine Zahl von 0 bis 12 ist; und

m+n 2 oder mehr beträgt.

2. Zusammensetzung nach Anspruch 1, worin

R H oder $C_1—C_4$-Alkyl ist;

$R_1$ H, $C_1—C_4$-Alkyl, Cyclohexyl, Cyclopentyl, Benzyl, Phenyl oder Phenyl substituiert mit $C_1—C_4$-Alkyl ist;

A zwei bis vier Kohlenstoffatome hat;

B zwei bis vier Kohlenstoffatome hat;

m eine Zahl von 0 bis 6 ist; und

n eine Zahl von 0 bis 6 ist.

3. Zusammensetzung nach Anspruch 1, worin

R H oder Methyl ist;

$R_1$ Phenyl ist;

A $—CH_2—CH_2—O—$ oder

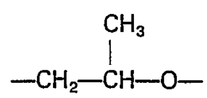

ist;

B $—CH_2—CH_2—O—$ oder

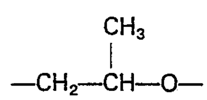

ist;

m eine Zahl von 0 bis 6 ist; und

n eine Zahl von 0 bis 6 ist.

4. Zusammensetzung nach Anspruch 1, worin
R H ist;
$R_1$ Phenyl ist;
A

$$-CH_2-CH-O-$$
$$|$$
$$CH_3$$

ist;
B $-CH_2-CH_2-O-$ ist;
m 1 ist; und
n 2 ist.

5. Zusammensetzung nach einem der vorstehenden Ansprüche, die von 80 bis 99 Gew.-% der ersten Verbindung und von 1 bis 20 Gew.-% der zweiten Verbindung enthält.

6. Durch Strahlung härtbare Mischung, die eine Zusammensetzung nach einem der vorstehenden Ansprüche und ein davon verschiedenes durch Strahlung härtbares Monomer umfaßt.

**Revendications**

1. Une composition comprenant un mélange de 50 à 99% en poids d'un premier composé de formule:

$$R \quad O \qquad\qquad O \quad H$$
$$| \quad \| \qquad\qquad \| \quad |$$
$$CH_2=C-C-O-A_m-B_n-C-N-R_1$$

et de 1 à 50% d'un second composé de formule:

$$R \quad O$$
$$| \quad \|$$
$$CH_2=C-C-O-A_m-B_n-H$$

dans laquelle, pour chaque composé:
R représente un atome d'hydrogène ou un radical alkyle;
$R_1$ représente un atome d'hydrogène, un radical alkyle, cycloalkyle, aryle ou aralkyle;
A représente un groupe -alkyl-O-;
B représente un groupe -alkyl-O- différent de A;
m est un nombre compris entre 0 et 12;
n est un nombre compris entre 0 et 12; et
m+n est égal à 2 ou plus de 2.

2. Une composition selon la revendication 1, dans laquelle:
R représente un atome d'hydrogène ou un radical alkyle en $C_1$ à $C_4$;
$R_1$ représente un atome d'hydrogène, un radical alkyle en $C_1$ à $C_4$, cyclohexyle, cyclopentyle, benzyle, phényle ou phényle substitué par un alkyle en $C_1$ à $C_4$;
A renferme de 2 à 4 atomes de carbone;
B renferme de 2 à 4 atomes de carbone;
m est un nombre compris entre 0 et 6; et
n est un nombre compris entre 0 et 6.

3. Une composition selon la revendication 1, dans laquelle:
R représente un atome d'hydrogène ou un radical méthyle;
$R_1$ représente le groupe phényle;
A représente le groupe $-CH_2-CH_2-O$ ou

$$CH_3$$
$$|$$
$$-CH_2-CH-O-;$$

B représente le groupe $-CH_2-CH_2-O$ ou

$$CH_3$$
$$|$$
$$-CH_2-CH-O-;$$

m est un nombre compris entre 0 et 6; et
n est un nombre compris entre 0 et 6.

4. Une composition selon la revendication 1, dans laquelle:
R représente un atome d'hydrogène;
$R_1$ représente le groupe phényle;

A représente le groupe

$$-CH_2-\underset{\substack{|\\ CH_3}}{CH}-O-;$$

B représente le groupe $-CH_2-CH_2-O-$;
m est égal à 1; et
n est égal à 2.

5. Une composition selon l'une quelconque des revendications précédentes, contenant de 80 à 99% en poids de ce premier composé et de 1% à 20% en poids de ce second composé.

6. Mélange durcissable par irradiation comprenant une composition telle que revendiquée dans l'une quelconque des revendications précédentes, et un monomère différent durcissable par irradiation.